Europäisches Patentamt

European Patent Office

Office européen des brevets

(11) Veröffentlichungsnummer: **0 149 821**
**A2**

(12) **EUROPÄISCHE PATENTANMELDUNG**

(21) Anmeldenummer: **84115803.3**

(22) Anmeldetag: **25.11.82**

(51) Int. Cl.⁴: **B 01 D 25/12**

(30) Priorität: 15.12.81 DE 3149665
04.06.82 DE 3221249
20.11.82 DE 3242917

(43) Veröffentlichungstag der Anmeldung:
31.07.85 Patentblatt 85/31

(84) Benannte Vertragsstaaten:
AT BE CH DE FR GB IT LI

(60) Veröffentlichungsnummer der früheren
Anmeldung nach Art. 76 EPÜ: 0 081 715

(71) Anmelder: Klinkau & Co. GmbH
Raiffeisenstrasse 6
D-8952 Marktoberdorf-Leuterschach(DE)

(72) Erfinder: Stanik, Reimund
Bischof-Ketteler-Strasse 10
D-8952 Marktoberdorf(DE)

(72) Erfinder: Klinkau, Werner
Fischackerweg 9
D-8131 Berg am Starnbergersee 1(DE)

(74) Vertreter: Goddar, Heinz J., Dr. et al,
FORRESTER & BOEHMERT Widenmayerstrasse 4/I
D-8000 München 22(DE)

(54) Membranfilterplatte mit verringerter Kontaktfläche zwischen Trägerplatte und Membran.

(57) Die Erfindung betrifft eine Membranfilterplatte mit Heiz-
und/oder Kühlmittelkanälen zwischen der Trägerplatte und
der Membran, wodurch eine weite Variabilität der Anwendungs temperaturen ermöglicht wird.

FIG. 15

EP 0 149 821 A2

Croydon Printing Company Ltd.

0149821.

FB 512/C

Firma Klinkau & Co. GmbH, Raiffeisenstraße 6,
8952 Marktoberdorf-Leuterschach

------------------------------------------------

Membranfilterplatte mit verringerter Kontaktfläche zwischen Trägerplatte und Membran

------------------------------------------------

Die Erfindung betrifft eine Membranfilterplatte
mit verringerter Kontaktfläche zwischen Trägerplatte und Membran nach dem Oberbegriff des
Patentanspruches 1.

Eine Schwierigkeit besteht bei den bislang verwendeten Membranfilterplatten darin, daß die mechanische Beanspruchung
der Membran bei den wechselnden Druckbeanspruchungen der
vorstehend beschriebenen Art außerordentlich hoch ist, so
daß es leicht zu einem Bruch der Membran nahe der Verbindungslinie mit dem Dichtrand kommen kann. Dieser Nachteil
wiegt umso schwerer, als es bei der bislang weitestgehend
gehandhabten einstückigen Ausbildung der Membran mit dem
Dichtrand und der Trägerplatte nicht möglich ist, die Materialeigenschaften der Membran unabhängig von den an die Trägerplatte und den Dichtrand zu stellenden Anforderungen
auf hohe Biegefestigkeit bzw. Flexibilität etc. zu optimieren.

423

0149821

Aus der DE-A-2 933 096 ist eine Membranfilterplatte
der eingangs genannten Art bekannt, bei der die Auslenkung der Membran in der Filtrations- wie in der
Abpreßphase durch Biegung um eine einzige, scharnierartige Sollbiegelinie erfolgt. Hierdurch treten beträchtliche Materialbeanspruchungen auf, die zu
frühzeitigen Ermüdungserscheinungen führen können.

Dabei ist insbesondere nicht die wünschenswerte
Variabilität in der Temperatur der Betriebsmedien
gegeben.

Der Erfindung liegt die Aufgabe zugrunde, eine Membranfilterplatte der eingangs genannten Art zu schaffen, deren Membran gegenüber den bislang verwendeten eine wesentlich verbesserte Lebensdauer aufweist, wobei es weiterhin bevorzugt
möglich sein soll, die Materialeigenschaften der einzelnen
Bauelemente der Membranfilterplatte, insbesondere der Membran selbst, im Hinblick auf den jeweiligen Anwendungszweck
zu optimieren; dabei sollen auch besonders heiße bzw.
kalte Betriebsmittel verwendet werden können.

Erfindungsgemäß wird diese Aufgabe durch die im Kennzeichen des Patentanspruches 1 aufgeführten Merkmale
gelöst.

Weist die Anlagefläche der Trägerplatte, wie dies weiter
oben beschrieben und auch beansprucht ist, ein System
von Abstandnocken auf, so bewirkt die hierdurch erzielte
Verringerung der Kontaktfläche zwischen Trägerplatte
und Membran gewissermaßen eine thermische Trennschicht zwischen diesen, durch welche verhindert wird, daß die
Trägerplatte im Normalbetrieb während der Filtrationsphase mit der gegebenenfalls relativ hohen Temperatur
des zu filternden Mediums, welches die Membran beaufschlagt, belastet wird. Gefördert wird diese Kühlwirkung
hinsichtlich der Trägerplatte natürlich noch dann, wenn
in der erfindungsgemäß vorgesehenen Weise durch die Abstandsnocken ein System von Kühlmittelkanälen gebildet
ist, welches auch in der Filtrationsphase von einem
Kühlmittel, beispielsweise Preßluft, durchströmt  ist.
Die hierdurch insgesamt erzielte thermische Entkopplung
der Trägerplatte von der Membran bewirkt, daß auch bei
hohen Temperaturen von beispielsweise 90$^\circ$ C, die bislang
als für aus Kunststoff hergestellte Membranfilterplatten
zu hoch angesehen wurden, weder eine unzulässige Materialbeanspruchung noch eine Verwerfung der Trägerplatte zu
besorgen sind. Derartige Verwerfungen treten immer dann
auf, wenn die Trägerplatte bereichsweise mit der hohen
Temperatur des zu filternden Mediums belastet wird, da die
Trägerplatte sich dann wegen ihrer bereichsweise unterschiedlichen Dicke jeweils unterschiedlich stark erwärmt
und ausdehnt. Trägerplattenverwerfungen dieser Art, die
natürlich entsprechende Verwerfungen der gesamten Membranfilterplatte zur Folge haben, führen zu unterschiedlichen Dicken des in der Preßphase erzeugten Preßkuchens,
woraus dann Schwierigkeiten bei einem gegebenenfalls
sich anschließenden Waschvorgang resultieren. Die Erfindung beseitigt all diese Schwierigkeiten dadurch,
daß zwar die Membran mit der relativ hohen Temperatur

0149821

des zu filternden Mediums belastet wird, wodurch in
der Regel deren Flexibilität aber in gewünschter Weise
günstig beeinflußt wird, während die Trägerplatte
nur mit einer wesentlich niedrigeren Temperatur belastet wird. Gewünschtenfalls kann natürlich der Kühlmittelstrom auch so stark eingestellt werden, daß die
Membran selbst deutlich gekühlt wird, um bei sehr
hohen Temperaturen des zu filternden Mediums deren
thermische Überbeanspruchung zu vermeiden. Es hat sich
bewährt, Membranfilterplatten der vorstehend beschriebenen
Art so einzusetzen, daß jeweils aufeinanderfolgend eine
Membranfilterplatte und eine herkömmliche Kammerfilterplatte, also ohne Membran, vorgesehen sind, wodurch die
Auswölbung der einzelnen Membranen in der Preßphase
optimal ausgenutzt werden kann. Bei zu filternden
Medien mit sehr hohen Temperaturen sollen selbstverständlich nur Membranfilterplatten der erfindungsgemäßen Art in einer Filterpresse vereinigt werden, um
auf diese Weise für eine Kühlung sämtlicher Platten
Sorge tragen zu können.

Bei Membranfilterplatten treten aber nicht nur dann
Probleme auf, wenn diese bei hohen Temperaturen von
beispielsweise 90$^{o}$ C eingesetzt werden sollen, vielmehr
ist es auch schwierig, zu filternde Medien mit besonders
niedriger Temperatur, insbesondere unterhalb Raumtemperatur, erst recht aber bei Temperaturen unterhalb von
0$^{o}$ C, zu behandeln, da hierdurch ebenfalls Verwerfungen
der Trägerplatte auftreten können, wenn diese mit der niedrigen Temperatur des zu filternden Mediums beaufschlagt wird, insbesondere aber die Membran selbst weitgehend ihre Elastizität verliert, so daß bei den in der
Preßphase notwendigen Membranbewegungen starke Materialbeanspruchungen der Membran insbesondere an der Einspannstelle auftreten, woraus Ermüdungsbrüche und
sonstige Beschädigungen resultieren können. Die Membranfilterplatte der vorstehend beschriebenen Art läßt
sich aber bei zu filternden Medien niedriger Temperatur sehr gut einsetzen, wenn in der bereits beschriebenen
Weise statt eines Kühlmittels ein Heizmittel verwendet
wird. Hierdurch gelingt es, auch besonders kalte zu
filternde Medien zu verarbeiten, die bislang als mit
aus Kunststoff hergestellten Membranfilterplatten der
in Rede stehenden Art nicht filtrierbar angesehen wurden.

Der Grund hierfür liegt darin, daß das die Heizmittelkanäle durchströmende Heizmittel nicht nur eine Abkühlung der Trägerplatte auf die niedrige Temperatur
des zu filternden Mediums verhindert, wodurch Verwerfungen etc. vermieden werden können, sondern daß
insbesondere auch die Membran während ihrer Anlage an
der Trägerplatte auf einer höheren Temperatur als das
zu filternde Medium gehalten wird, so daß die Membran
in der jeweiligen Preßphase eine wesentlich höhere
Elastizität hat, als dies bei der Temperatur des zu
filternden Mediums der Fall wäre. Hierdurch bleibt
die Membran voll beweglich, und Beschädigungen derselben,
insbesondere im Randbereich, wie sie bei einer Versteifung der Membran infolge zu niedriger Temperatur
auftreten könnten, lassen sich zuverlässig verhindern.

Es sei darauf hingewiesen, daß unter dem Ausdruck
"schräg", soweit er in Verbindung mit dem Verlauf der
Anlagefläche der Trägerplatte auf die Trägerplattenmittelebene hin bzw. in Verbindung mit der Übergangsfläche des Basisteiles und/oder des Stützteiles sowie
in Verbindung mit der Schmiegefläche des Stützringes
und schließlich auch der Stirnfläche des Stützringes
in ihrem Verlauf auf die Trägerplattenmittelebene hin
verwendet wird, ein Winkel von 3 bis 15$^O$, vorzugsweise
5 bis 10$^O$, verstanden wird.

Die erfindungsgemäß vorgeschlagene Membranfilterplatte kann
aus einer Vielzahl geeigneter Werkstoffe hergestellt werden.
Beispielsweise kann die Trägerplatte in vorteilhafter Weise
aus Polypropylen hergestellt werden, ebenso wie dieses Material auch sehr gut für den Dichtrandrahmen geeignet ist.
Wegen der notwendigen Toleranzanforderungen scheiden allerdings schwer bearbeitbare Materialien in der Regel aus, in
dem Fall nämlich, in dem die erforderlichen Toleranzanforderungen nur durch eine mechanische Nacharbeit erreicht
werden könnten. Auch Hartschaumstoffe lassen sich zusätzlich
zu herkömmlichen, für derartige Bauteile bekannten Thermoplasten in vorteilhafter Weise verwenden.

Werden thermoplastische Kunststoffe eingesetzt, so läßt sich
das Umformverfahren in vorteilhafter Weise zur Herstellung
von Membranfilterplatten der erfindungsgemäßen Art verwenden. Die bei verschiedenen Ausführungsformen verwendeten
Dübel lassen sich ebenfalls aus einer Vielzahl von Werkstoffen herstellen, wobei die Aufgabe der Dübel einmal im
Zusammenhalt und der maßlichen Fixierung der jeweiligen Einzelteile besteht, zum anderen aber auch darin, bestimmte Kräfte aufzunehmen, so wie beispielsweise die im wesentlichen senkrecht zur Trägerplattenmittelebene verlaufenden Randdübel die Aufgabe haben, die auf die kammerseitige

Schräge des Dichtrandes wirkende Innenkraft (Filtrationsdruck), soweit diese Kraftkomponente nicht durch die Reibungskraft in Dichtrandbereich, also durch den Schließdruck, ausgeglichen werden kann, auf die Trägerplatte zu übertragen, damit ein Ausbiegen des Dichtrandes verhindert wird. Die erforderliche Anzahl sowie die Dimensionierung der Dübel, auch letzten Endes die Teilung und das Dübelmaterial ergeben sich in für den Fachmann ohne weiteres ersichtlicher Weise aus den jeweiligen konstruktiven Voraussetzungen.

Auch bei Verwendung an sich verschweißbarer Membranfilterplatten, bei denen alle Bauteile aus Polypropylen oder dergleichen bestehen, empfiehlt es sich aus Kostengründen gegebenenfalls, lediglich eine lokale Verschweißung, beispielsweise im Eckenbereich der Membranfilterplatten, vorzugsweise lediglich im Bereich der Eckbohrungen, vorzusehen, wobei sich beispielsweise das Widerstandsschweißverfahren (mit Kupferdraht-Einlage oder dergleichen) eignet, aber auch die HF-Schweißung.

Wird eine auswechselbare Membran verwendet, so ist es in dem Fall, daß die Membran selbst nicht aus dichtendem Material besteht, wie Gummi, notwendig, in den Ecken, also in der Umgebung der Eckbohrungen, Dichtungen vorzusehen, die im übrigen natürlich auch beispielsweise um die Dübel angeord-

0149821

net sein können, obwohl dies nicht unbedingt erforderlich
ist. Die Dicke der jeweiligen Dichtung entspricht natürlich
in etwa dejenigen der Membran, mit einer von der Shore-Härte
abhängigen Plustoleranz.

Es sei nochmals hervorgehoben, daß in dem Fall, daß keine
Verschweißung verwendet wird, wobei die einzelnen Teile also
ausschließlich durch die Dichtranddübel etc. bzw. Halteklammern miteinander zusammengehalten werden, eine freie Auswahl
der Werkstoffe für jedes Einzelteil möglich ist. Die Membranen sind dabei auswechselbar. Es ist keine komplizierte
Oberflächengestaltung im Dichtrandrahmenbereich vorgesehen,
so daß also auch beim Auswechseln der Membran keine Toleranzprobleme auftreten können, sondern stets eine einwandfreie Abdichtung gewährleistet ist. Der Dichtrandrahmen läßt
sich im übrigen beispielsweise unter Einsatz thermoplastischer Werkstoffe in bekannten und bewährtem Schweißkonstruktionen ausführen. Die Membran läßt sich in dem Fall,
daß sie aus thermoplastischem Kunststoff hergestellt werden
soll, beispielsweise durch Prägen bzw. Umformen einer Extrudertafel oder auch durch Urformung aus Pulver oder Granulat
in der Preßform herstellen. Auch lassen sich Gummimembranen
in der erfindungsgemäß vorgesehenen ebenen, unkomplizierten
Form ohne weiteres vulkanisieren. Bei entsprechender Berücksichtigung dieser Werkstoffvariante läßt sich ein Formwerkzeug konstruieren, mittels dessen sowohl Membranen aus
Kunststoff als auch aus Gummi in nur einer Form herstellbar
sind, wodurch die Herstellungskosten der erfindungsgemäßen
Membranfilterplatte beträchtlich gesenkt werden können.

Trotz ihrer einfachen Form liegt die Membran vollkommen
dicht zwischen den Dichtrandrahmen, bedingt durch die
maßliche Gestaltung von Dichtrandrahmen und Trägerplatte,
wobei zwischen diesen Teilen eine randseitige, umlaufende
Auflage ausgebildet ist, auf welcher die Membran rundum
aufliegt und welche bewirkt, daß die Membran in der bereits
angegebenen und weiter unten noch im einzelnen diskutierten
Form zwei separate, jeweils nur für eine Bewegungsrichtung
vorgesehene, scharnierartige Bewegungszonen in den betreffenden Sollbiegelienien aufweist.

Weitere Merkmale und Vorteile der Erfindung ergeben sich aus
der nachfolgenden Beschreibung, in der Ausführungsbeispiele
anhand der Zeichnung im einzelnen erläutert sind. Dabei
zeigt:

Fig. 1 ein erstes Ausführungsbeispiel einer
        Membranfilterplatte nach der Erfindung
        in der Draufsicht;

Fig. 2 einen Eckbereich der Membranfilterplatte
        von Fig. 1 in vergrößerter Darstellung
        mit Detailwiedergabe der Zu- und Ablaufbohrungen, teilweise geschnitten;

Fig. 3 einen Schnitt entlang der Linie V-V von
        Fig. 2;

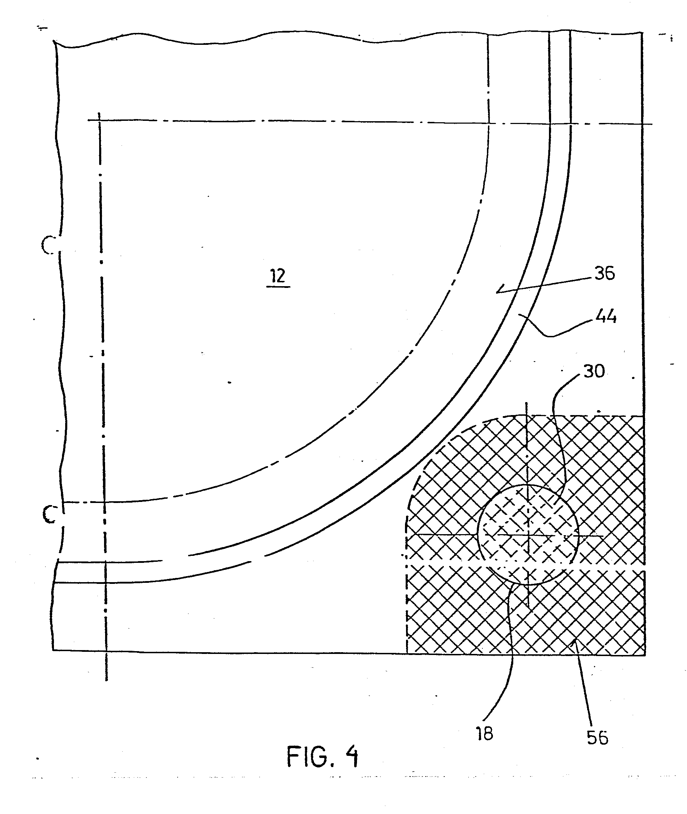

Fig. 4 ein abgewandeltes Ausführungsbeispiel der
        Ausbildung eines Membranfilterplatteneckbereiches in der Draufsicht;

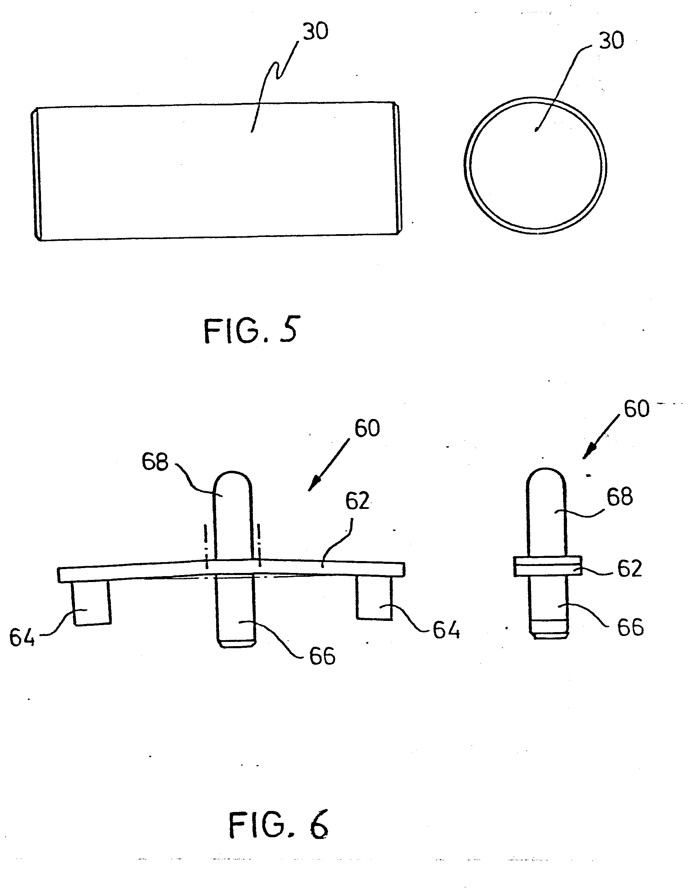

Fig. 5 einen bei der erfindungsgemäßen Membranfilterplatte verwendbaren Dübel in der
        Seiten- und in der Stirnansicht

Fig. 6 eine bei der erfindungsgemäßen Membranfilterplatte verwendbare Halteklammer in
        der Seiten- und in der Vorderansicht;

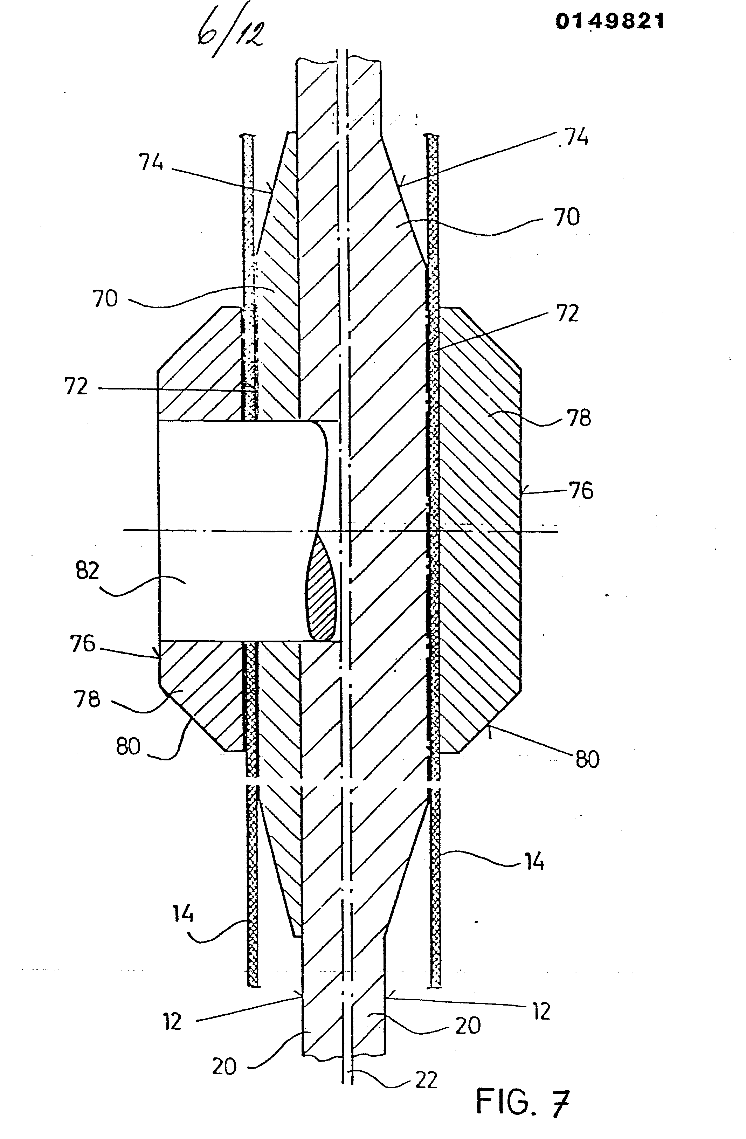

Fig. 7 einen Stütznocken eines Ausführungsbeispieles der Erfindung im Schnitt senkrecht zu Trägerplattenmittelebene;

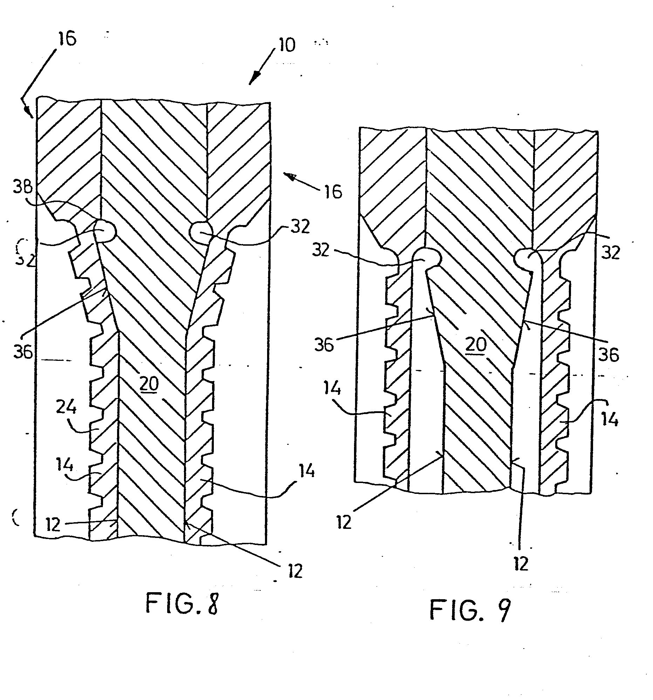

Fig. 8 im Schnitt senkrecht zur Plattenebene den
        dem Dichtrand benachbarten Bereich eines
        ersten Ausführungsbeispieles der Membranfilterplatte nach der Erfindung in der
        Filtrationsphase;

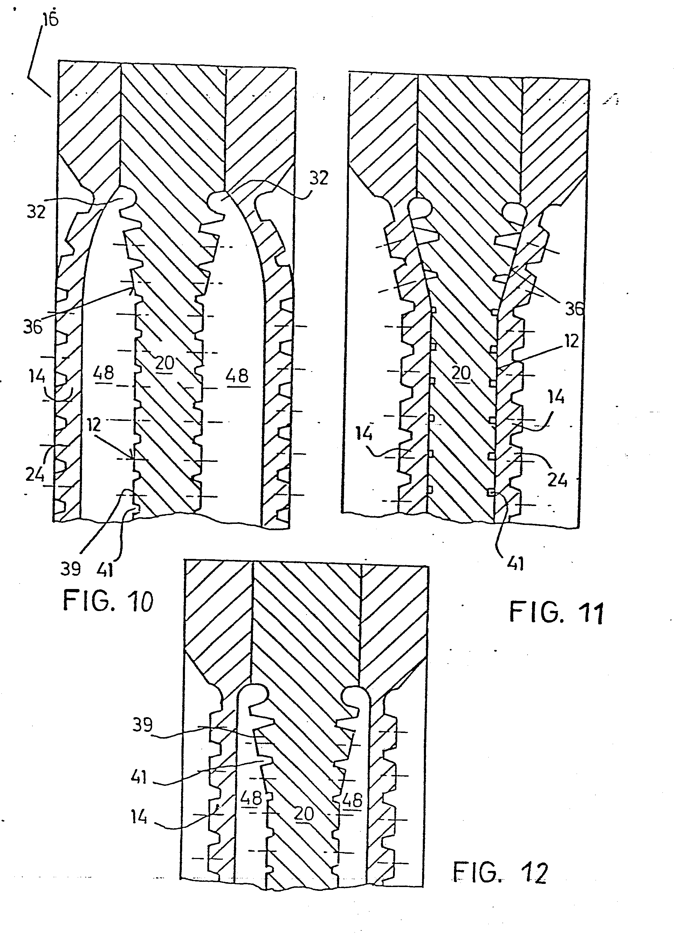

Fig. 9 in mit Fig. 8 übereinstimmender Darstellung den Dichtrandbereich des dort
gezeigten Ausführungsbeispieles in unbelastetem Zustand der Membran;

Fig. 10 in ähnlicher Darstellung wie Fig. 8 den
Dichtrandbereich eines zweiten Ausführungsbeispieles einer Membranfilterplatte nach der Erfindung in der Preßphase;

Fig. 11 den in Fig. 10 gezeigten Dichtrandbereich in der Filtrationsphase;

Fig. 12 den in Fig. 10 und Fig. 11 wiedergegebenen Dichtrandbereich in unbelastetem
Zustand der Membran;

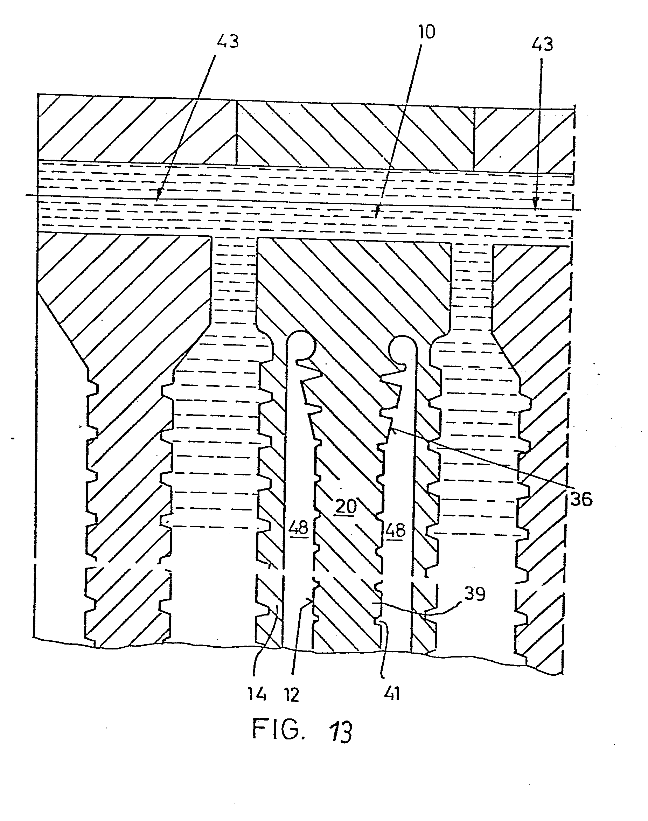

Fig. 13 den Dichtrandbereich der in den Fig. 10
bis 12 wiedergegebenen Membranfilterplatte in in eine Filterpresse eingebautem Zustand, Membran unbelastet;

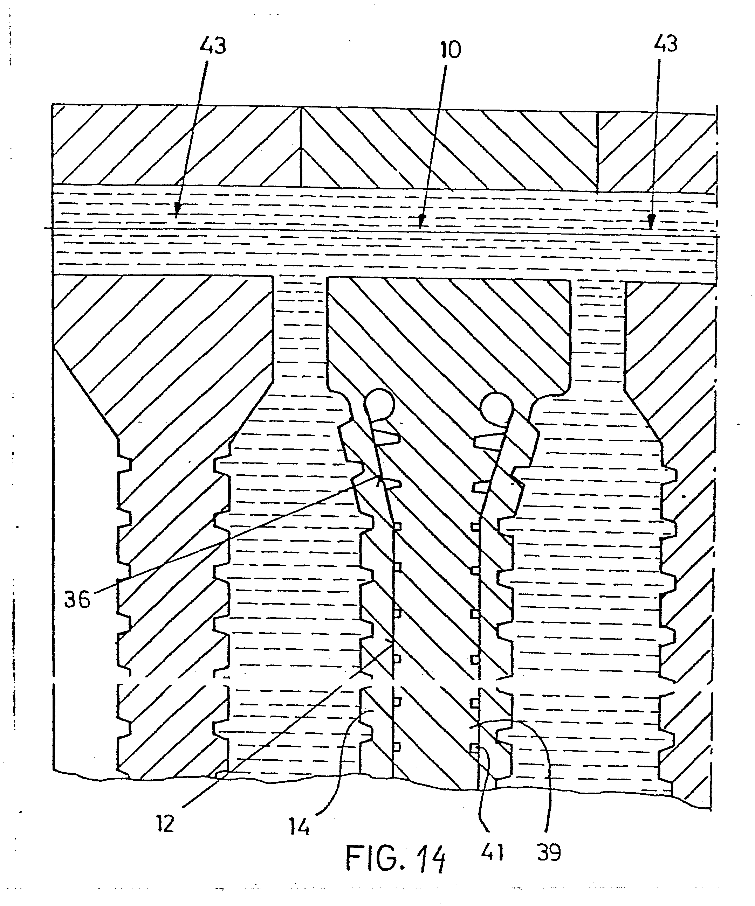

Fig. 14 den in Fig. 13 wiedergegebenen Dichtrandbereich in der Filtrationsphase;

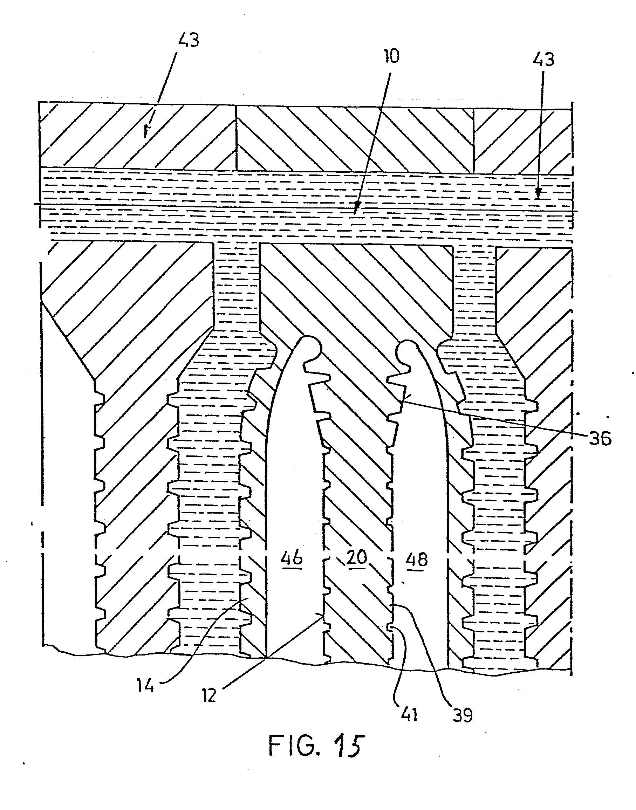

Fig. 15 den in Fig. 13 und 14 wiedergegebenen
Dichtrandbereich in der Preßphase;

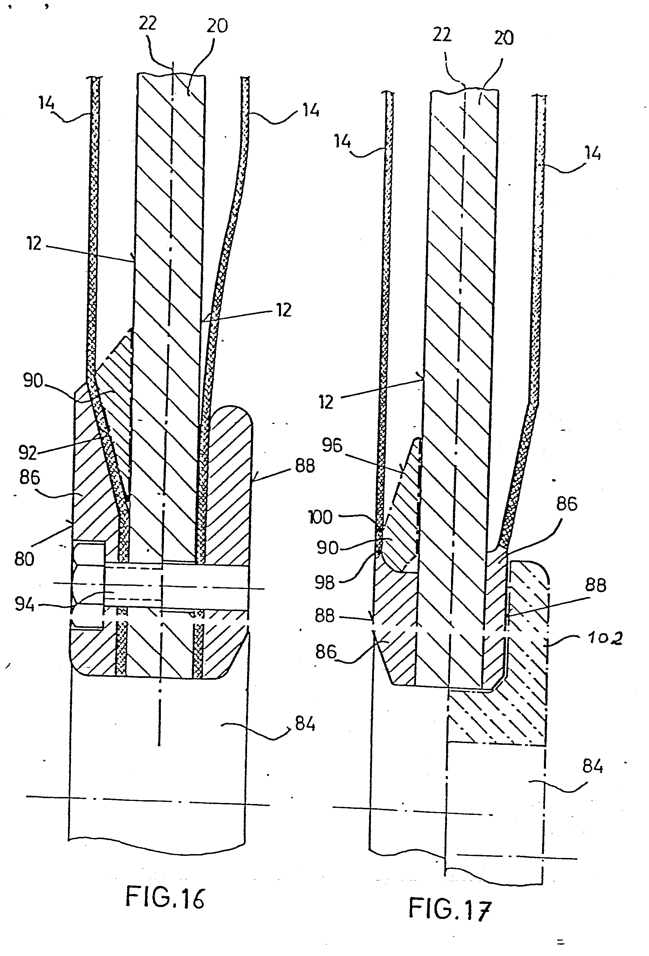

Fig. 16 einen Schnitt durch einen Zentraleinlauf
eines Ausführungsbeispieles der Erfindung;
und

Fig. 17 einen Schnitt durch ein anderes Ausführungs-
         beispiel eines Zentraleinlaufes der er-
         findungsgemäßen Membranfilterplatte.

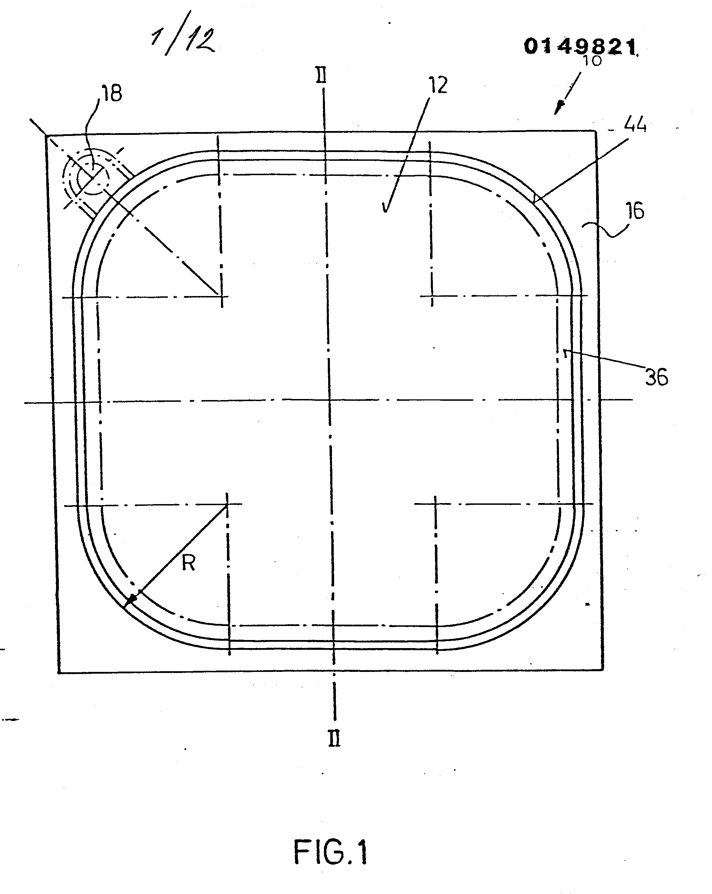

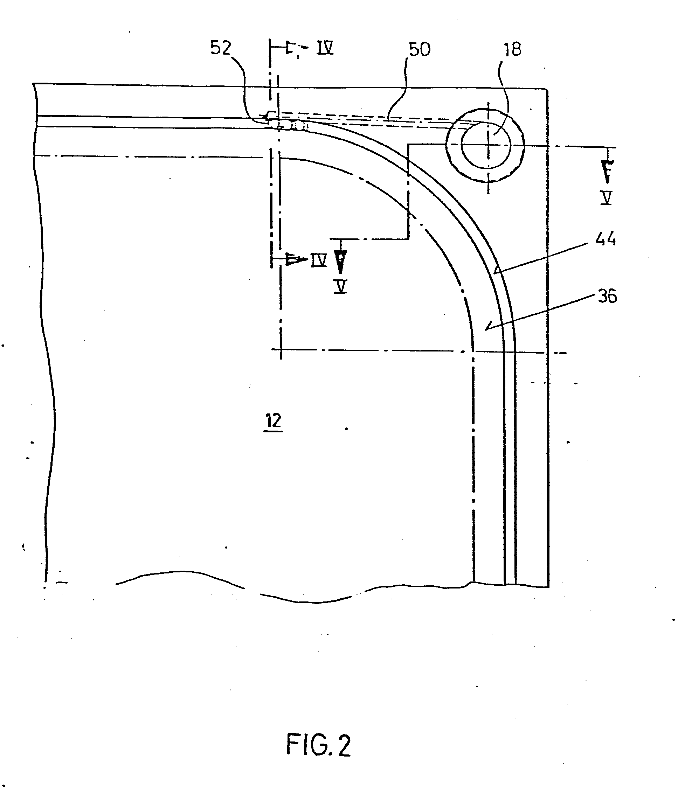

Wie Fig. 1 erkennen läßt, weist die dort in der Draufsicht
gezeigte Membranfilterplatte 10 in ihrem Zentralbereich eine
im wesentlichen ebene Trägerplattenfläche 12 auf, die von
einer in Fig. 1 nicht erkennbaren, jedoch in Fig. 2 dargestellten Membran 14 aus flexiblem Material, wie Kunststoff,
Gummi oder dergleichen, abgedeckt ist, die wiederum im Randbereich 16 der Membranfilterplatte dichtend gehalten ist.
Fig. 1 läßt weiterhin erkennen, daß eine Eckeinlaufbohrung 18 vorgesehen ist und daß die vier Schmalseiten der Membran 14
jeweils durch Viertelkreise mit dem Radius R miteinander
verbunden sind. Handelt es sich um eine Membranfilterplatte
im herkömmlichen Format von 1200 x 1200 mm, so beträgt der
Radius R beispielsweise 320 mm.

Beidseits der Trägerplatte 20 , deren    Längsmittelebene mit
22 bezeichnet ist, ist jeweils eine der Membranen 14 angeordnet. Die Membran 14, die an ihrer der Trägerplattenfläche
12 abgewandten Seite mit Distanznocken 24, Distanzrippen oder
dergleichen zum Anlegen eines Filtertuches 26 versehen ist,
ist dichtend zwischen dem Randbereich 16 der Trägerplatte 20
und einem Dichtrandrahmen 28 aufgenommen. Die Membran 14
liegt im Einbauzustand in ihrer unbelasteten Normalstellung,
wobei sie also eine im wesentlichen ebene Tafel bildet. Der
Dichtrandrahmen ist mittels eines Dübels 30 mit dem Randbereich 16 der Trägerplatte 20 verbunden, wobei der Dübel in
der ihn aufnehmenden Bohrung mit Klemmsitz aufgenommen ist, hier aber auch verklebt oder verschweißt sein kann, sofern das Material, aus dem die Membran 14 besteht, dies zuläßt. Natürlich wäre auch eine Schraubverbindung zwischen Dichtrandrahmen 28 und Trägerplatte 20 möglich.

Fig. 2 zeigt den Eckbereich einer Membranfilterplatte mit Zubzw. Ablaufbohrungen. Dabei ist erkennbar, daß eine Eckeinlaufbohrung 18 über einen Kanal 50 mit einer Reihe von Querbohrungen 52 in Verbindung steht, die mit der jeweiligen Filterkammer kommunizieren. Der Kanal 50 ist in die Oberfläche des Dichtrandrahmens 28 eingefräst, ebenso wie die Querbohrungen 52 zu der der Membran 14 zugewandten Dichtfläche des Dichtrandrahmens 28 hin offen sind. Hierdurch ergibt sich eine besonders leichte Bearbeitungsmöglichkeit, weil die seitlichen Enden der Kanäle 60 bei der Herstellung des Dichtrandrahmens 28 von vornherein verschlossen gehalten werden können, wodurch die Notwendigkeit eines nachfolgenden Auffüllens durch Verschweißen oder dergleichen entfällt. Allerdings läßt sich die offene Kanalausbildung nur dann verwenden, wenn der Dichtrandrahmen 28 nicht mit der Trägerplatte 20 verschweißt wird, da natürlich ansonsten die entsprechenden Kanäle bzw. Bohrungen oder Nuten leicht verschmieren könnten.

Demgegenüber sind der Kanal 50 und die Querbohrungen 52 in das Material des Dichtrandrahmens 28 eingearbeitet, so daß bei dieser Ausführungsform auch eine leichte Verschweißbarkeit gegeben ist. Eine Verschweißung scheidet natürlich ohnehin aus, sofern die Membran 14 aus Gummi oder dergleichen besteht.

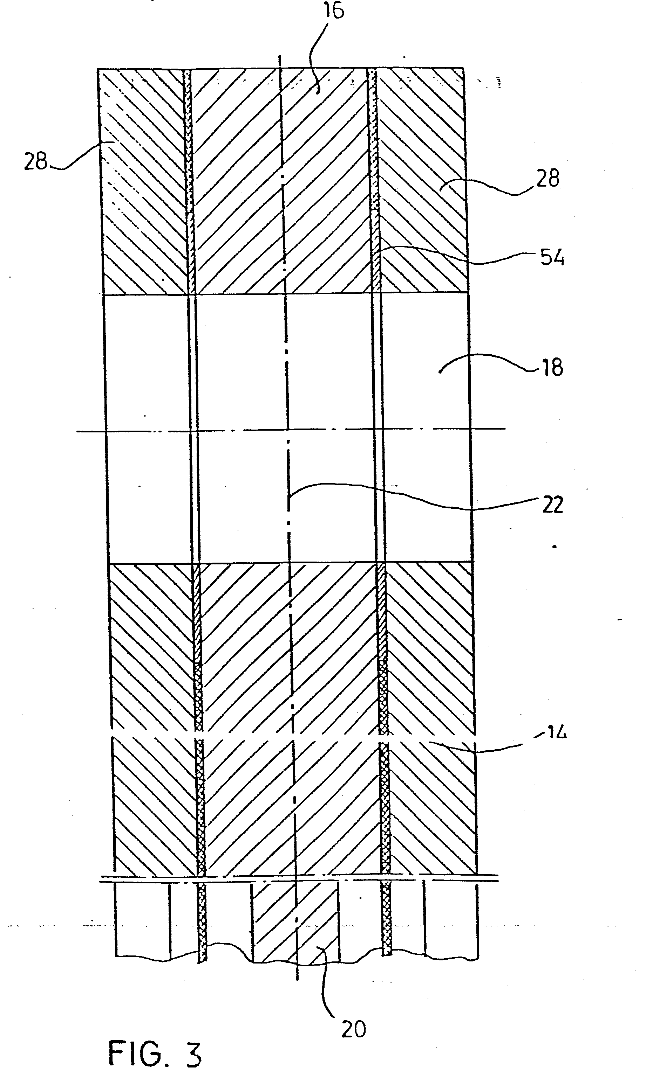

Fig. 3 zeigt eine Eckeinlaufbohrung 18 der bereits diskutierten Art, bei welcher die eigentliche Bohrung von einer Ringdichtung 54 aus dichtendem Material umgeben ist. Diese Ausführungsform empfiehlt sich dann, wenn die Membran 14 nicht aus selbstdichtendem Material besteht, beispielsweise also dann, wenn die Membran 14 ebenso wie die Trägerplatte 20 bzw. die Dichtrandrahmen 28 aus Kunststoff, wie Polypropylen oder dergleichen, besteht.

Aus der Detaildarstellung von Fig. 4 geht hervor, daß dort eine Eckbohrung 18, die natürlich hier nicht als Einlauf dient, mittels eines Dübels 30 verschlossen und daraufhin der kreuzschraffiert gezeichnete Eckbereich 56 verschweißt worden ist. Die Verschweißung eines oder mehrerer Eckbereiche 56 kann beispielsweise durch Widerstandsschweißung (mit eingelegtem Kupferdraht oder dergleichen) erfolgen, wobei bedarfsweise noch zusätzliche Halteelemente verwendet werden können, wie diese anhand von Fig. 6 noch im einzelnen erläutert werden, obwohl die dort gezeigten Halteeinrichtungen auch ohne jedwede Verschweißung der einzelnen Membranfilterplattenelemente verwendbar sind.

Fig. 5 zeigt eien der bereits genannten Dübel 30, die, wie dargestellt, nahe ihren Enden konisch zulaufend ausgebildet sein können, um so das Eintreiben in Bohrungen 18 der beschriebenen Art zu erleichtern. Die Dübel 30 verlaufen also in eingebautem Zustand stets senkrecht zur Trägerplattenmittelebene 22 und dienen dazu, entweder, bei Schweißverbindungen, die in dem jeweiligen Schweißbereich (wie 56) vorgesehenen Bohrungen 18 zu verschließen oder aber entsprechend ihrem Klemmsitz, der beispielsweise verwendet werden
kann, innerhalb der Bohrungen 18 die Einzelelemente der Membranfilterplatte gegen parallel zur Trägerplattenmittelebene, also radial, wirkende Kräfte zu sichern. Bei geeigneter Verbindung mit dem sie umgebenden Material, beispielsweise durch Schweißen, Kleben, durch starken Klemmsitz oder
durch Verschraubung, können die Dübel 30 natürlich auch
senkrecht zur Trägerplattenmittelebene 22 wirkende Kräfte
aufnehmen.

Zum Zusammenhalten der Membranfilterplattenelemente gegen
derartige senkrecht zur Trägerplattenmittelebene 22 wirkenden Kräfte dienen jedoch im wesentlichen Halteklammern 60
der in Fig. 6 gezeigten Art. Wie dort erkennbar ist, weist
die Halteklammer 60 einen Steg sowie an der in Fig. 6 unten
liegenden Seite zwei Rahmenzapfen 64 und einen zentralen
Plattenzapfen 66 auf. Die Rahmenzapfen 64 bzw. der Plattenzapfen 66 werden in die Bohrungen der Dichtrandrahmen 28 bzw. des Randbereiches 16 der
Trägerplatte 20 eingesetzt, wobei die Verbindung auch hier
mit Klemmsitz, durch Verschweißen etc., wie weiter oben in
Verbindung mit den Dübeln 30 dargelegt, erfolgen kann. An
der dem Plattenzapfen 66 gegenüberliegenden Seite des Steges
62 ist ein an seinem freien Ende abgerundeter Haltezapfen 68
angeordnet, der zum Einhängen des Filtertuches 26 dient.
Rings um die Membranfilterplatte ist eine Vielzahl derartiger Halteklammern 60 vorgesehen, so daß nicht nur ein zuverlässiges Zusammenhalten der Membranfilterplattenelemente gegen senkrecht zur Trägerplattenmittelebene 22 wirkende
Kräfte gewährleistet ist, sondern auch die Filtertücher 26
in hinreichender Weise mittels der abgerundeten Haltezapfen
68 befestigt werden können. Die Halteklammer 60 kann vorzugsweise aus Kunststoff hergestellt sein, jedoch sind auch andere Materialien, wie Metall, möglich. Der Steg 62 ist im
übrigen vorzugsweise, wie aus Fig. 6 ersichtlich, leicht
gewinkelt ausgebildet, um so eine innere Spannung der Halteklammer 60 zu erzielen, die den gegebenenfalls erwünschten
Klemmsitz der Zapfen 64, 66 in den Bohrungen fördert.

Fig. 7 zeigt zwei Ausführungsbeispiele eines gegebenenfalls
bei der erfindungsgemäßen Membranfilterplatte vorhandenen
Stütznockens. Jeder der Stütznocken weist ein von der Trägerplattenfläche 12 im wesentlichen bis zur Ebene der Membran 14 in deren unbelasteter Normalstellung vorspringendes
Basisteil 70 auf, welches bei der Ausführungsform gemäß Fig.
10, rechts, einstückig mit der eigentlichen Trägerplatte 20
ausgebildet ist, während es sich bei dem Ausführungsbeispiel
von Fig. 10, links, um ein separates Basisteil 70 handelt.
Das Basisteil 70 weist jeweils eine parallel zur Trägerplattenmittelebene 22 verlaufende Stirnfläche 72 und eine von
dieser schräg zur Trägerplattenfläche 12 verlaufende Übergangsfläche 74 auf. Weiterhin weist der Stütznocken ein im
wesentlichen von der Ebene der Membran 14 in deren unbelasteter Normalstellung bis zu einer Stützfläche 76 vorstehendes Stützteil 78 auf, von dessen im wesentlichen ebener
Stützfläche 76 aus eine ebenfalls schräge Übergangsfläche 80
in Richtung auf die Membran 14 verläuft. Sowohl die Übergangsfläche 74 des Basisteils 70 als auch die Übergangsfläche 80 des Stützteiles 78 sind dabei nahe ihrem der Stirnfläche 72 bzw. der Stützfläche 76 abgewandten Ende stufenförmig abgesetzt.

Das Basisteil 70 und/oder das Stützteil 78 können mit der Trägerplatte 20 unter Einschluß der Membran 14 auf verschiedene Weise verbunden, beispielsweise verschweißt, verschraubt oder verdübelt sein, wobei wegen der Einzelheiten auf die Darlegungen weiter oben hinsichtlich der Dübel 30 verwiesen sei. In Fig. 7 links, ist jedenfalls eine Zentralschraube 82 gezeigt, die gegebenenfalls in ein Innengewinde der entsprechenden Bohrung der Trägerplatte 20 eingeschraubt sein könnte. Es könnte natürlich aber auch eine die Gesamtanordnung senkrecht zur Trägerplattenmittelebene 22 durchsetzende Bohrung vorgesehen sein, in welche die Schraube 82 eingeschraubt wäre, gegebenenfalls unter Verwendung einer nicht gezeigten Kontermutter.

Wie Fig. 8 und 9 erkennen lassen - in Fig. 9 liegt die Membran 14 im Einbauzustand in ihrer unbelasteten Normalstellung, wobei sie also eine im wesentlichen ebene Tafel bildet, während sie in Fig. 8 in der sogenannten Filtrationsphase gezeigt ist, in der sie also jeweils in Richtung auf die Trägerplatte 20 durch ein unter Druck stehendes zu filterndes Medium beaufschlagt ist -, sind bei dem dort gezeigten Ausführungsbeispiel die der Membran 14 zugewandten Oberflächen der Trägerplatte 20 unter Vermeidung definierter Biegelinien als mit kontinuierlich sich ändernder Biegung von der Trägerplattenfläche 12 im Zentralbereich der Trägerplatte 20 in den Randbereich der Trägerplatte übergehende Schmiegeflächen 36 ausgebildet, deren Übergang in den Randbereich der Trägerplatte 20 im Anschluß an eine Schweißaustriebsnut 32 im Bereich einer Verbindungsstelle 38
der Membran 14 mit dem Dichtrand erfolgt. Die Schmiegefläche 36 gewährleistet, daß sich auch verhältnismäßig
dicke und wenig flexible Membranen 14 ohne jedwede Sollbiegelinien verwenden lassen, ohne daß es im randnahen
Einspannbereich der Membranen zu unzulässigen Materialbeanspruchungen käme. Fig. 8 und 9 lassen darüberhinaus
erkennen, daß die Schmiegefläche 36 etwa in der Mitte
des Überganges zwischen der Trägerplattenfläche 12
und dem Randbereich 16 einen ebenen Mittelbereich aufweist.

Bei dem in den Fig. 10 bis 12 gezeigten Ausführungsbeispiel
sind die den Membranen 14 zugewandten Oberflächen der
Trägerplatte 20 jeweils mit einer Vielzahl von Abstandsnocken 39 versehen, wodurch in der Trägerplattenfläche 12
und in der Schmiegefläche 36 ein System von Kühlmittelkanälen 41 gebildet ist. Hierdurch ist es möglich, eine
zwischen der Trägerplatte 20 und der Membran 14 gebildete
Membrankammer 48 kontinuierlich, d.h. beispielsweise auch
in der in Fig. 11 gezeigten Filtrationsphase, in der die
Membranen 14 unter dem Druck des zu filternden Mediums
an die Trägerplatte 20 angepreßt sind, mit Kühlmittel
zu beaufschlagen, welches also die Membrankammer 48
bzw. das Kühlmittelkanalsystem 41 kontinuierlich durchströmt, wodurch eine effektive thermische Trennung
zwischen der Trägerplatte 20 und den Membranen 14 gewährleistet ist. Die Abstandsnocken 39 sind dabei vorzugsweise, wie in den Fig. 10 bis 12 deutlich zu erkennen,
im Bereich der Schmiegefläche 36 entsprechend deren allgemeinem Verlauf angeschrägt, um auf diese Weise eine kontinuierliche Biegung der Membran 14 in den verschiedenen
Betriebszuständen zu erzielen.

Die Fig. 13 bis 15 zeigen einen Ausschnitt aus einer Filterpresse, in der eine Membranfilterplatte 10 jeweils zwischen zwei nicht mit Membranen versehenen Kammerfilterplatten 43 angeordnet ist. Durch diese Anordnung wird
die in Fig. 15 deutlich erkennbare "Ausbeulwirkung" der
Membran 14 unter dem Einfluß des unter Druck auf die
Membrankammer 48 aufgegebenen Fließmittels, welches
gleichzeitig als Kühlmittel auch in der in Fig. 14 gezeigten Filtrationsphase , dient, besonders weitgehend
ausgenutzt. Selbstverständlich wird im Betrieb jeweils
so vorgegangen, daß in der in Fig. 14 gezeigten Filtrationsphase das Fließmittel in die Membrankammer 48
mit wesentlich geringerem Druck eingegeben wird, bzw.
das Kühlmittelkanalsystem 41 mit wesentlich geringerem
Druck durchströmt, als dies in der in Fig. 15 gezeigten
Preßphase der Fall ist.

In Fig. 16 und 17 sind verschiedene Ausführungsbeispiele des
Zentralbereiches einer Membranfilterplatte mit zentralem Filtrationseinlauf wiedergegeben. Die Membran 14 ist dabei in
dem die Zentraleinlaufbohrung 84 umgebenden Dichtungsbereich
über ein ringförmiges Haltestück 86, dessen verschiedene
Ausführungsformen noch näher zu erläutern sein werden,
dichtend mit der Trägerplatte 20 verbunden. Die der Trägerplatte 28 abgewandte Stirnfläche 88 der verschiedenen
Haltestücke 86 hat dabei jeweils von der Trägerplattenfläche
12 einen geringeren Abstand als die der Trägerplattenmittelebene 22 parallele Umfangsfläche    des Dichtrandrahmens bzw. der Dichtrandrahmen 28.

Bei dem in Fig. 16 ganz links gezeigten Ausführungsbeispiel
ist die Zentraleinlaufbohrung 84 mit Abstand von einem
Stützring 90 umgeben, dessen Innendurchmesser größer ist als
der Durchmesser der Zentraleinlaufbohrung 84. Der Stützring
90 weist bei dem Ausführungsbeispiel von Fig. 16, links,
eine von der Ebene der Membran 14 in deren unbelasteter Normalstellung in Richtung auf die Zentraleinlaufbohrung 84 im
wesentlichen schräg bis zur Trägerplattenfläche 12 verlaufende Schmiegefläche 92 auf, wobei das Haltestück 86 bei dem
in Fig. 16 links gezeigten Ausführungsbeispiel    in dem
der Schmiegefläche 92 entsprechenden Bereich komplementär zu
dieser ausgebildet ist, so daß also die Membran 14 zwischen
dem Haltestück 86 und dem Stützring 90 klemmend gehalten
ist.

In hiervon abgewandelter Form ist das Haltestück 86 bei dem
Ausführungsbeispiel von  Fig. 16, rechts, an seinem der Zentraleinlaufbohrung 84 abgewandten Rand abgerundet ausgebildet, wobei hier die Membran 14 ohne Zwischenschaltung
eines Stützringes oder dergleichen unmittelbar in den Dichtspalt zwischen dem Haltestück 86 und der Trägerplattenfläche
12 einläuft. Die beiden Haltestücke 86 sind im übrigen bei
dem in Fig. 16 gezeigten Ausführungsbeispiel durch eine
Schraube 94, die entweder mit einer entsprechenden Innenbohrung oder aber einer Gegenmutter oder Gegenhülse zusammenwirkt, fest miteinander verbunden. Es kann auch eine Gesamtverschraubung vorgesehen sein, wie sie in Figur 17 gezeigt ist.

Haltestück 86 und/oder Stützring 90 können im übrigen mit der Trägerplatte 22 und/oder der Membran in einer der bereits beschriebenen Weisen verschweißt, verklebt oder verdübelt sein. Dies gilt auch für das in Fig. 17, links gezeigte Ausführungsbeispiel des Zentraleinlaufes, bei dem die Membran 14 einstückig mit dem Haltestück 86 ausgebildet ist. An der Trägerplatte 20 liegt dabei auch hier ein Stützring 90 an, wobei dieser aber in ähnlicher Weise wie der weiter oben beschriebene Dichtrandrahmen 28 so ausgebildet ist, daß die der Membran zugewandte Stirnfläche 96 des Stützringes 90 von dessen Innenkante aus zur Erzeugung zweier Sollbiegelinien 98, 100 zunächst im wesentlichen parallel zur Trägerplattenmittelebene 22, dann schräg auf diese hin verlaufend und abschließend abgestuft zur Trägerplattenfläche 12 ausgebildet ist. Hierdurch wird bei einer Druckbelastung der Membran 14 die bereits weiter oben im Zusammenhang mit dem Dichtrandrahmen 28 im einzelnen erörterte Doppelscharnierwirkung erzielt.

Bei dem in Fig. 17., rechts, gezeigten Ausführungsbeispiel ist die Membran 14 ebenfalls einstückig mit dem Haltestück 86 ausgebildet, jedoch ist dieses dabei so dünn, daß keine untunliche Biegebeanspruchung der Membran 14 zu besorgen ist, so daß hier auf den Stützring verzichtet werden kann. Fig. 17. zeigt rechts weiterhin noch einen die Zentraleinlaufbohrung 84 durchsetzenden Klemmring 102 zum Zusammenhalten der Haltestücke 86 und der Trägerplatte 20, der natürlich auch bei den anderen gezeigten Ausführungsbeispielen des Zentraleinlaufes vorgesehen sein kann.

Die Einzelteile der vorstehend beschriebenen Membranfilterplatte können bei allen Ausführungsbeispielen zumindest teilweise aus Kunststoff bestehen, wobei es von besonderem Vorteil ist, daß die Materialeigenschaften jedes Einzelteiles in Abhängigkeit von den jeweiligen Anforderungen optimiert werden können. So kann insbesondere die Membran aus selbstdichtendem Material, beispielsweise aus Gummi, bestehen und ist darüber hinaus auswechselbar, wodurch sich eine weite Variationsbreite in den Anwendungsmöglichkeiten der erfindungsgemäßen Membranfilterplatte ergibt.

Die vorstehend beschriebenen Kühlmittelkanäle 41 lassen sich natürlich auch in der weiter oben bereits beschriebenen Weise als Heizmittelkanäle verwenden (Fig. 10 bis 12). Dabei ist es dann also möglich, die Membrankammer 48 kontinuierlich mit Heizmittel zu beaufschlagen, welches also die Membran 48 bzw. das Kanalsystem 41 kontinuierlich durchströmt, wodurch die Temperatur sowohl der Trägerplatte 20 als auch insbesondere der elastischen Membran 14 auf einer höheren Temperatur als derjenigen des zu filternden Mediums gehalten werden kann.

FB 512/C


A n s p r ü c h e
===================


1. Membranfilterplatte für eine Filterpresse oder
dergleichen, mit einer Trägerplatte (20), wenigstens
einer an einer Seite der Trägerplatte angeordneten,
vorzugsweise mit Distanznocken oder dergleichen zum
Auflegen eines Filtertuches oder dergleichen versehenen Membran (14) und einem die Trägerplatte und
die Membran umgebenden, diese im wesentlichen fließmitteldicht miteinander verbindenden Dichtrand, dessen
der Trägerplattenmittelebene parallele Umfangsfläche(n)
auf der die Membran aufweisenden Seite bzw. beidseits
der Trägerplatte mit Abstand von der Membranebene in
deren unbelasteter Normalstellung angeordnet ist bzw.
sind, wobei die Kontaktfläche zwischen der Trägerplatte
(20) und der Membran (14) durch an der der Membran (14)
zugewandten Anlagefläche (12, 36) der Trägerplatte (20)
oder an der der Trägerplatte (20) zugewandten Fläche
der Membran (14) vorgesehene Abstandsnocken (39) verringert ist, dadurch gekennzeichnet, daß zwischen den
Abstandsnocken (39) Kühl- oder Heizmittelkanäle (41)
gebildet sind; und daß die durch die Anlagefläche (12,
36) einerseits und die Membran (14) andererseits definierte Membrankkammer (48) von Kühl- oder Heizmittel
durchströmbar ist.


423

2. Membranfilterplatte nach Anspruch 1, dadurch gekennzeichnet, daß die Membrankammer (48) sowohl in der Filtrationsphase als auch in der Preßphase von demselben Fließmittel mit je nach Betriebsphase steuerbarem Druck beaufschlagbar ist.

3. Membranfilterplatte nach Anspruch 1 oder 2, bei der
die der Membran zugewandte Anlagefläche der Trägerplatte
als mit kontinuierlich sich ändernder Biegung von der
Verbindungsstelle (38) in die Trägerplattenfläche (12)
im Zentralbereich der Trägerplatte (20) übergehende
Schmiegefläche (36) ausgebildet ist, dadurch gekennzeichnet, daß die der Membran (14) zugewandten Stützflächen der Abstandsnocken (39) der Trägerplatte (20)
im Bereich der Schmiegefläche (36) entsprechend deren
allgemeinen Verlauf angeschrägt sind.

4. Membranfilterplatte nach einem der vorangehenden
Ansprüche, dadurch gekennzeichnet, daß bei im wesentlichen viereckiger Ausbildung von Dichtrand und
Trägerplatte (20) der Übergang zwischen den Schmalseiten der Membran (14) jeweils durch einen Viertelkreis gebildet ist.

5. Membranfilterplatte nach einem der vorangehenden
Ansprüche, dadurch gekennzeichnet, daß der Abstand
der Membran (14) von der Trägerplattenfläche (12) ca.
1/3 des Abstandes der zur Trägerplattenmittelebene
(22) parallelen Umfangsfläche (34) des Dichtrandes
(28) beträgt.

FIG.1

0149821

M 19·12·84

12

FIG.2

FIG. 3

0149821

M 19·12·84

FIG. 4

30

30

FIG. 5

60

68

62

60

68

62

66

64

64

66

FIG. 6

FIG. 7

0149821

M 19·12·84

FIG. 8

FIG. 9

0149821

FIG. 10

FIG. 11

FIG. 12

FIG. 13

0149821

FIG. 14

0149821

FIG. 15

0149821

M 19·12·84

FIG.16

FIG.17